# EUROPÄISCHE PATENTSCHRIFT

(11) **EP 1 590 408 B1**
(45) Veröffentlichungstag und Bekanntmachung des Hinweises auf die Patenterteilung: **27.12.2006**
(21) Anmeldenummer: 04701880.9
(22) Anmeldetag: 14.01.2004
(51) Int. Cl.: C09C 1/50, F23D 14/22

(54) **RUSSGENERATOR MIT VERENGTER LÖSCHGASLEITUNG**
SOOT GENERATOR WITH CONSTRICTED QUENCH GAS LINE
GENERATEUR DE SUIE POURVU D'UNE CONDUITE DE GAZ D'EXTINCTION RETRECIE

(30) Priorität: 24.01.2003 CH 100032003
(43) Veröffentlichungstag der Anmeldung: 02.11.2005
(73) Patentinhaber: Jing, Lianpeng, 3052 Zollikofen (CH)
(72) Erfinder: Jing, Lianpeng, 3052 Zollikofen (CH)
(86) Internationale Anmeldenummer: PCT/CH2004/000013
(87) Internationale Veröffentlichungsnummer: WO 2004/065494

(56) Entgegenhaltungen:
- EP-A- 1 055 877
- US-A- 4 751 069

## Beschreibung

Die Erfindung bezieht sich auf einen Russgenerator zum Erzeugen von Russ gemäss Oberbegriff des Anspruchs 1.

In der europäischen Patentanmeldung EP-A1-1 055 877 ist ein Russgenerator beschrieben, mit welchem Russpartikel mit wohldefinierten chemischen und physikalischen Eigenschaften erzeugbar sind. Dazu werden Brennstoff und Oxidationsgas derart in eine Brennkammer geführt, dass eine Russpartikel erzeugende Parallel-Diffusionsflamme ("co-flow diffusion flame") gebildet wird. Die Spitze der Diffusionsflamme wird mit einem Löschgas angeströmt, sodass die Verbrennungsprozesse gestoppt und die Russpartikel weggeleitet werden. Nachteilig an diesem Russgenerator ist, dass er zum Betrieb relativ viel Platz benötigt, sodass er für einen mobilen Einsatz, z.B. zur Kontrolle von Rauchmeldern in einem Gebäude, schlecht geeignet ist.

Ausgehend von diesem Stand der Technik ist es Aufgabe der vorliegenden Erfindung, einen Russgenerator der eingangs erwähnten Art zu schaffen, mit welchem Russpartikel mit wohldefinierten Eigenschaften in reproduzierbarer Weise erzeugbar sind, der jedoch eine kompaktere Bauweise aufweist.

Ein erfindungsgemässer Russgenerator, welcher diese Aufgabe löst, ist im Anspruch 1 angegeben. In den weiteren Ansprüchen sind bevorzugte Ausführungen angegeben.

Der erfindungsgemässe Russgenerator hat den Vorteil, dass er die Produktion von Russpartikeln mit wohldefinierten Eigenschaften in reproduzierbarer Weise ermöglicht und aufgrund seiner kompakteren Bauweise insbesondere für einen mobilen Einsatz geeignet ist.

Die Erfindung wird im Folgenden anhand von bevorzugten Ausführungsbeispielen unter Bezugnahme auf Figuren erläutert.
Fig. 1 zeigt schematisch einen Querschnitt des erfindungsgemässen Russgenerators;
Fig. 2 zeigt ein zweites Ausführungsbeispiel des erfindungsgemässen Russgenerators; und
Fig. 3 zeigt ein drittes Ausführungsbeispiel des erfindungsgemässen Russgenerators.

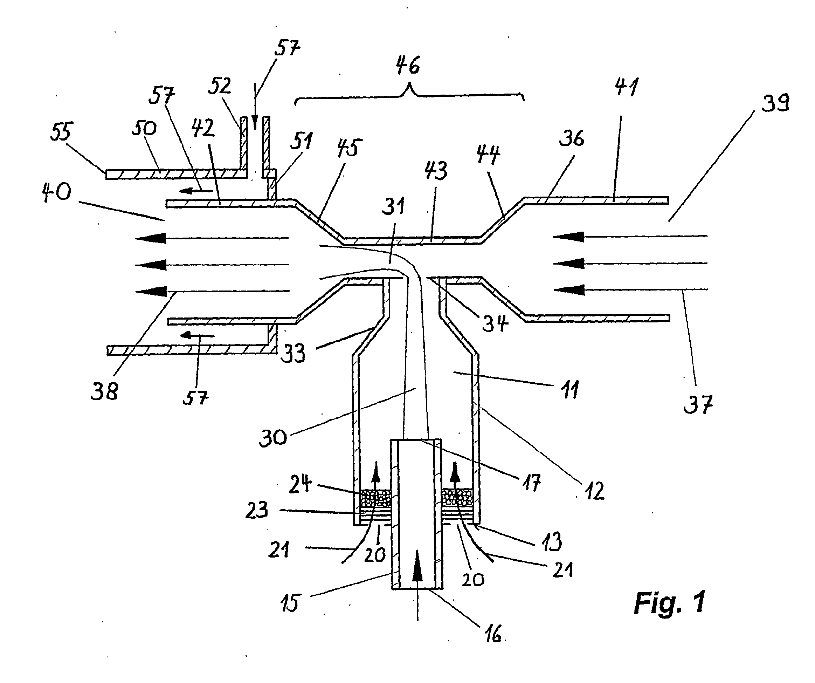

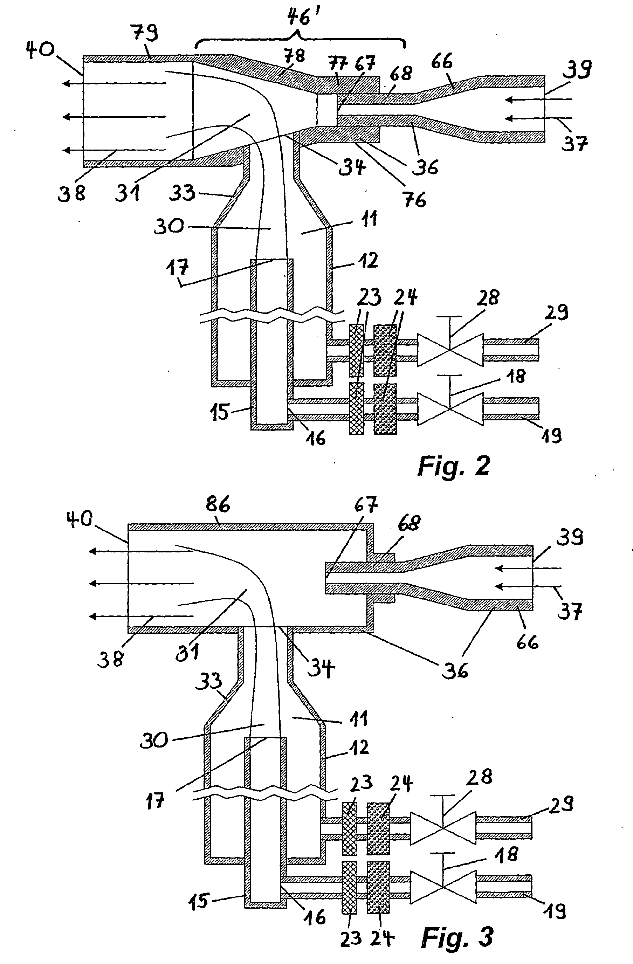

Der in Figur 1 dargestellte Russgenerator umfasst eine Brennkammer 11, welche aus einem zylindrischen Aussenrohr 12 gebildet ist. Am unteren Ende 13 des Aussenrohrs 12 ist ein zylindrisches Innenrohr 15 eingelassen, welches koaxial zum Aussenrohr 12 verläuft. Der Einlass 16 des Innenrohrs 15 ist mit einem (nicht dargestellten) Brennstoffbehälter verbindbar, sodass darin gespeicherter Brennstoff mit einer bestimmten Zuflussrate (1/sec) durch den Auslass 17 des Innenrohrs 15 in die Brennkammer 11 geleitet werden kann. Der Brennstoffbehälter ist z.B. eine Gasflasche, in welcher der Brennstoff unter Überdruck gespeichert ist. Zur Regulation der Zuflussrate ist zwischen dem Brennstoffbehälter und dem Einlass 16 ein Reduzierventil vorgesehen (cf. Bezugszeichen 18 in den Figuren 2 und 3).

Die Unterseite 13 des Aussenrohrs 12 ist mit Öffnungen 20 versehen, sodass Umgebungsluft von aussen in die Brennkammer 11 strömen kann, wie dies in Figur 1 durch die Pfeile 21 illustriert ist. Aufbereitungsmittel 23 und 24 zum Aufbereiten der in die Brennkammer 11 strömende Luft sind in Form von ringförmigen Schichten zwischen der Innenwand des Aussenrohrs 12 und der Aussenwand des Innenrohrs 15 angebracht. Die Aufbereitungsmittel 23, 24 umfassen einen Filter 23 zum Filtrieren der Luft sowie Trocknungsmittel 24, mittels welchen der Luft Feuchtigkeit entzogen werden kann.

Zur Erzeugung von Russpartikeln wird in der Brennkammer 11 eine Diffusionsflamme 30 gebildet. Dazu wird der Brennstoff durch das Innenrohr 15 in die Brennkammer 11 geleitet und von der durch die Öffnung 20 strömende Luft, welche als Oxidationsgas dient, in einer im Wesentlichen parallelen Strömung umhüllt. Als Brennstoff eignet sich z.B. kohlenwasserstoffhaltiges Gas wie Propan oder andere flüssige oder gasförmige Brennstoffe (dampf- oder tröpfchenförmiger Dieseltreibstoff, Benzin, etc.). Nach der Zündung bildet sich über dem Auslass 17 des Innenrohrs 15 eine im Wesentlichen zylinderförmige Diffusionsflamme 30 aus, in welcher durch Verbrennung des Brennstoffs mit dem Oxidationsgas Russpartikel gebildet werden. Zur Herstellung von Russpartikeln ist es auch denkbar, in der Brennkammer eine vorgemischte Flamme, wie sie bei Bunsenbrennern vorkommt, oder eine turbulente Flamme zu bilden.

Die Brennkammer 11 weist weiter ein nach oben sich verjüngendes Ende 33 auf mit einer Einmündung 34, welche mit einer Löschgasleitung 36 verbunden ist. Die Löschgasleitung 36 weist an dem einen Ende einen Einlass 39 auf zur Speisung mit Löschgas 37. Dazu ist der Einlass 39 mit einem (nicht dargestellten) Löschgasbehälter in Form einer Gasflasche verbindbar ist, in welchem Löschgas gespeichert ist. Zur Regulation der Zuflussrate des Löschgases in die Löschgasleitung 37 ist zwischen dem Löschgasbehälter und dem Einlass 39 ein Reduzierventil als Reguliermittel (nicht dargestellt) angebracht.

Am anderen Ende der Löschgasleitung 36 befindet sich ein Auslass 40, aus welchem u.a. das Löschgas zusammen mit den Russpartikeln hinausströmen kann, wie dies durch den Pfeil 38 illustriert ist. Der Einlass 39 und Auslass 40 wird durch einen ersten bzw. zweiten Rohrabschnitt 41, 42 gebildet, der zylindrisch ist und etwa den Durchmesser D1 aufweist.

Die Löschgasleitung 36 ist zwischen Ein- und Auslass 39, 40 mit einer Verengung 46 versehen, in welche quer dazu das Ende 34 der Brennkammer 11 mündet, sodass die mittlere Strömungsrichtung der Diffusionsflamme 30 in der Brennkammer 11 und die mittlere Strömungsrichtung 37 des Löschgases in der Löschgasleitung 36 im Wesentlichen rechtwinklig zueinander sind. Die Verengung 46 wird durch einen dritten zylindrischen Rohrabschnitt 43 mit einem Durchmesser D2 gebildet, wobei D2 < D1. Die beiden Enden 44, 45 des dritten Rohrabschnitts 43 sind beispielsweise konusförmig ausgebildet und gehen jeweils in den ersten bzw. zweiten Rohrabschnitt 41, 42 über. Das Verhältnis der beiden Durchmesser, D1/D2, ist vorzugsweise im Bereich 2 bis 10.

Beim Betrieb des Russgenerators wird Löschgas 37 durch die Löschgasleitung 36 geleitet, sodass dieses mit der aus dem Brennraum 11 austretenden Stoffströmung, welche u.a. die Russpartikel enthält, vermischt wird und so die Vebrennungsprozesse bei der Löschstelle 31 gestoppt werden. Die Russpartikel werden dann durch die Löschgasströmung zum Auslass 40 fortgetragen.

Als Löschgas wird ein Inertgas verwendet wie Stickstoffgas, Edelgas oder Kohlendioxid. Es ist auch denkbar, Luft als Löschgas zu verwenden, insbesondere Luft, die kühler als die Flamme 30 ist. Beispielsweise kann Luft aus der Umgebung mittels Pumpe durch die Löschgasleitung 36 geleitet werden. Da die Lufttemperatur in etwa der Raumtemperatur entspricht und somit niedriger als die Flammentemperatur ist, werden aufgrund einer Kühlung die Verbrennungsprozesse bei der Löschstelle 31 gestoppt. Dieser Vorgang kann durch eine relativ hohe Strömungsgeschwindigkeit der Luft in der Löschgasleitung 36 unterstützt werden, wodurch das aus der Einmündung 34 ragende Ende der Flamme 30 förmlich ausgeblasen wird.

Die Verengung 46 funktioniert ähnlich wie ein Venturi-Rohr: Da das Löschgas im dritten Rohrabschnitt 43 schneller strömt als im ersten bzw. zweiten Rohrabschnitt, 41 bzw. 42, entsteht ein Unterdruck, der dazu führt, dass Umgebungsluft von aussen durch die Öffnung 20 angesaugt wird. Die Schichten 23, 24 sorgen dafür, dass die Luft entsprechend aufbereitet wird. Zur Bildung der Diffusionsflamme 30 sind somit keine Gasflaschen mit darin gespeicherter synthetischer Luft notwendig, sodass eine besonders kompakte Bauweise des Russgenerators ermöglicht wird. Es ist jedoch auch möglich, den durch die Verengung produzierten Unterdruck dazu zu verwenden, Oxidationsgas (z.B. Sauerstoff in reiner Form oder vermischt mit Stickstoff), welches in einem Behälter gespeichert ist, anzusaugen.

Optional weist der Russgenerator ein zum zweiten Rohrabschnitt 42 koaxiales Mantelrohr 50 auf, durch dessen rechtes Ende 51 der zweite Rohrabschnitt 42 hindurch geführt ist. Das Mantelrohr 50 ist in der Nähe vom Ende 51 mit einem Anschluss 52 versehen zum Einspeisen eines Verdünnungsgases in das Mantelrohr 50, wie dies durch die Pfeile 57 in Figur 1 illustriert ist. Das andere Ende 55 des Mantelrohrs 50 ist offen und ragt über den Auslass 40 hinaus.

Das Mantelrohr 50 dient zusammen mit dem Anschluss 52 als Verdünnungsmittel, um ein Verdünnungsgas (beispielsweise Luft) mit der aus dem Auslass 40 tretenden gelöschten Stoffströmung 38 zu vermischen und diese so zu verdünnen. Je nach der Zuflussrate des Verdünnungsgases kann entsprechend die Konzentration der Russpartikel (Partikelanzahl pro m³), welche schliesslich aus dem Ende 55 des Mantelrohrs 50 herausströmen, geändert werden.

Die Brennkammer 11 mit dem Auslass 17 braucht nicht zwingendermassen quer zur Löschgasleitung 36 angeordnet zu sein. Es ist denkbar, das obere Ende 33 des Aussenrohrs 12 gebogen auszugestalten, sodass der mittlere Teil der Flamme 30 entsprechend umgelenkt werden kann. Je nach Anwendungszweck kann der Winkel, um welchen das obere Ende 33 gebogen ist, entsprechend gewählt sein. Beispielsweise kann der Winkel etwa 90 Grad betragen, sodass die Löschgasleitung 36 und der untere Teil der Brennkammer 11 in dieselbe Richtung zeigen. Diese Anordnung hat den Vorteil, dass der Austritt der Stoffströmung 38 aus dem Auslass 40 bzw. 55 nach oben erfolgen kann, um so beispielsweise mittels der erzeugten Russpartikel einen Sensor an einer Zimmerdecke testen zu können.

Figur 2 zeigt ein weiteres Ausführüngsbeispiel des Russgenerators. Elemente, die denen von Figur 1 entsprechen, sind mit denselben Bezugszeichen versehen.

Die in Figur 2 gezeigte Löschgasleitung 36 umfasst ein erstes Leitungsteil 66 mit dem Einlass 39 und einem Auslass 67, welches z.B. als rotationssymmetrisches Rohr ausgebildet ist. Der Einlass 39 ist, wie oben beim Beispiel gemäss Figur 1 beschrieben, an einen Löschgasbehälter anschliessbar. Das gemäss der Figur 2 linke Ende des Leitungsteils 66 umfasst ein zylindrisches Rohr 68, welches den Innendurchmesser D2 aufweist.

Die Löschgasleitung 36 umfasst weiter ein zweites Leitungsteil 76, welches folgende Rohrabschnitte aufweist: einen ersten Rohrabschnitt 77, welcher einen konstanten Querschnitt aufweist, einen zweiten sich aufweitenden Rohrabschnitt 78 und einen dritten Rohrabschnitt 79, welcher im Auslass 40 mündet, zylindrisch ist und einen Innendurchmesser D1 aufweist. Das Ende 68 des ersten Leitungsteils 66 ist im ersten Rohrabschnitt 77 des zweiten Leitungsteils 76 eingefügt. Die Einmündung 34 der Brennkammer ist im zweiten Rohrabschnitt 78 angeordnet.

Der Durchmesser D1 des dritten Rohrabschnitts 79 bzw. des Auslasses 40 und der Durchmesser D2 des Auslasses 67 sind unterschiedlich gewählt, sodass sich dadurch eine Verengung 46' in der Löschgasleitung 36 ergibt. Der Querschnitt der Löschgasleitung 36 braucht jedoch nicht kreisförmig zu sein, insbesondere brauchen der dritte Rohrabschnitt 79 bzw. das Rohr 68 nicht zylindrisch zu sein. Der Querschnitt der Löschgasleitung 36 kann eine beliebige Kontur aufweisen, die geeignet ist, um bei der Einmündung 34 bzw. der Löschstelle 31 einen Unterdruck zu erzeugen. Allgemein ist eine Verengung gegeben, wenn die Löschgasleitung 36 zwischen dem Einlass 39 und dem Auslass 40 einen nicht-konstanten Querschnitt aufweist.

Wird Löschgas durch die Löschgasleitung 36 geführt, so strömt es im Rohrabschnitt mit kleinerem Querschnitt, z.B. im Rohr 68, schneller als im Rohrabschnitt mit grösserem Querschnitt, z.B. im dritten Rohrabschnitt 79. Die unterschiedlichen Strömungsgeschwindigkeiten führen demnach zu Änderungen im Druck. Wie oben bei der Figur 1 bereits erklärt, kann diese Druckänderung dazu benutzt werden, um bei der Einmündung 34 einen Unterdruck zu erzeugen.

Es wurde festgestellt, dass auch der Atmosphärendruck, der zeitlich und örtlich variabel ist, einen gewissen Einfluss auf die Eigenschaften der erzeugten Russpartikel hat. Nebst oder anstelle dem Ansaugen von Oxidationsgas kann die durch die Verengung 46' erzeugte Druckänderung dazu benutzt werden, um Schwankungen im Atmosphärendruck auszugleichen. Dazu ist das Ende 68 des ersten Leitungsteils 66 verschiebbar im zweiten Leitungsteil 76 eingefügt, sodass die Distanz zwischen Auslass 67 und Einmündung 34 und somit auch der erzeugte Unterdruck verändert werden kann. Durch entsprechendes Einstellen dieser Distanz können Schwankungen im Atmosphärendruck ausgeglichen werden, sodass die Reproduzierbarkeit der hergestellten Russpartikel in besonders hohem Masse gewährleistet ist. Die Druckregulierung in der Löschgasleitung 36 mittels Verengung ermöglicht eine einfache und kompakte Bauweise des Russgenerators.

Das Ausgleichen von Atmosphärendruckschwankungen mittels Verengung kann auch dann erfolgen, wenn die Zufuhr von Oxidationsgas nicht von aussen, sondern aus einem Behälter erfolgt, in welchem Oxidationsgas gespeichert ist. Wie Figur 2 zeigt, ist das Aussenrohr 12 mit einer Anschlussleitung 29 versehen, die mit einem Oxidationsgasbehälter verbindbar ist. Die Anschlussleitung 29 weist ein Reduzierventil 28 zur Regulation der Zuflussrate und Filtermittel 23 sowie Trocknungsmittel 24 auf. Analog ist das Innenrohr 15 mit einer Anschlussleitung 19 verbunden, welche mit dem Brennstoffbehälter verbindbar ist und welche ein Reduzierventil 18, Filtermittel 23 sowie Trocknungsmittel 24 aufweist.

Figur 3 zeigt ein weiteres Ausführungsbeispiel des Russgenerators, wobei Elemente, die denen von Figur 1 bzw. 2 entsprechen, mit denselben Bezugszeichen versehen sind.

Wie Figur 3 zeigt, umfasst die Löschgasleitung 36 das erste Leitungsteil 66 mit dem Rohr 68 und ein zweites Leitungsteil 86, das beispielsweise als zylindrisches Rohr mit Innendurchmesser D1 ausgebildet ist. Das Rohr 68 ist in das zweite Leitungsteil 86 eingefügt, sodass dadurch eine Verengung gebildet ist. Die Einmündung 34 ist am zweiten Leitungsteil 86 angeordnet.

Das Ende 68 des ersten Leitungsteil 66 ist in das zweite Leitungsteil 86 verschiebbar eingefügt, um die Distanz zwischen Auslass 67 und Einmündung 34 und somit die jeweils erzeugte Druckänderung regulieren zu können. Die in Figur 3 gezeigte Löschgasleitung 36 erlaubt mittels der Verengung 67 auf einfache Art einen Unterdruck bei der Einmündung 34 zu erzeugen und zu regulieren.

Falls eine Regulation des erzeugten Unterdruckes nicht nötig ist, kann das erste Leitungsteil 66 auch fest mit dem zweiten Leitungsteil 86 verbunden sein.

Um die aus dem Auslass 40 austretende Stoffströmung 38 zu verdünnen, kann der Russgenerator gemäss Figur 2 bzw. 3 mit Verdünnungsmitteln 50, 52 versehen sein, wie sie in Figur 1 gezeigt sind.

Mit dem hier beschriebenen Russgenerator können Russpartikel mit einer im Wesentlichen reproduzierbaren Grössenverteilung hergestellt werden. Verschiedene Parameter beeinflussen die Russpartikel-Eigenschaften wie Grösse und Konzentration:
- Art und Zusammensetzung des Brennstoffs
- Zuflussrate (in l/sec) des Brennstoffs
- Zuflussrate des Oxidationsgases (im Wesentlichen gegeben durch das Kontraktionsverhältnis D1/D2 der Verengung bei gegebener Zuflussrate beim Anschluss 16)
- Zuflussrate des Löschgases
- Löschstelle der Diffusionsflamme durch Löschgas (im Wesentlichen gegeben durch den Abstand zwischen dem Auslass des Innenrohrs und der Einmündung der Brennkammer)
- etc.

Beim zweiten und dritten Ausführungsbeispiel stellt auch die Distanz zwischen Einmündung 34 und Auslass 67 einen Parameter dar, der die Eigenschaften der erzeugten Russpartikel beeinflussen kann.

Je nach Wahl der Parameter können z.B. Russpartikel erzeugt werden, deren Grösse auf einer logarithmischen Skala im Wesentlichen gaussverteilt ist, wobei das Maximum kleiner als 1 Mikrometer ist, z.B. im Bereich von 0.01 bis 0.3 Mikrometer. Es ist aber auch möglich, z.B. durch entsprechende Wahl des Brennstoffs, Russpartikel herzustellen, die grösser als 1 Mikrometer sind.

Je nach Anwendungszweck des Russgenerators ist es möglich, die Parameter so festzulegen, dass Russpartikel mit den gewünschten Eigenschaften erzeugbar sind. So kann es z.B. aufgrund von gesetzlichen Bestimmungen notwendig sein, dass in einem Gebäude Sensoren wie Rauchmelder unter bestimmten Bedingungen überprüft werden. Die oben erwähnten Parameter sind so festgelegt, dass Russpartikel herstellbar sind, die den gesetzlichen vorgegebenen Bedingungen entsprechen. Dazu ist es beispielsweise denkbar, nur zertifizierte Brennstoffbehälter zuzulassen, in welchem eine bestimmte Zusammensetzung aus z.B. Propan- und Stickstoffgas gespeichert ist. Nach Verbinden des Brennstoff- sowie des Löschgasbehälters mit dem Russgenerator wird der Brennstoff gezündet und der Auslass 40 des Russgenerators in die Nähe eines Rauchmelders gebracht und getestet. Wegen der Handlichkeit des Rauchgenerators kann so in rascher und einfacher Weise eine Vielzahl von Rauchmeldern überprüft werden. Da der Brennstoffbehälter austauschbar ist, können nacheinander verschiedene Brennstoffbehälter angeschlossen werden, in denen jeweils eine bestimmte Art bzw. Zusammensetzung des Brennstoffs gespeichert ist, und so Russpartikel in verschiedenen, wohldefinierten Grössenklassen erzeugt und zum Testen eines Rauchmelders benutzt werden.

Der Russgenerator kann auch für andere Zwecke eingesetzt werden, z.B. zur Eichung von Russpartikel-Messgeräten, zur Abgasmessung bei Motorfahrzeugen, zum Prüfen von Filtern, zur Untersuchung von Aerosolen, etc.

## Patentansprüche

1. Russgenerator mit mindestens einer Brennkammer (11), in welcher Brennstoff mit Oxidationsgas in mindestens einer Russpartikel erzeugenden Flamme (30) verbrennbar ist, und
einer Löschgasleitung (36), die mit der Brennkammer verbunden ist, **dadurch gekennzeichnet, dass**
die Löschgasleitung eine Verengung (46, 67) aufweist, sodass eine Druckänderung, insbesondere ein Unterdruck erzeugbar ist.

2. Russgenerator nach Anspruch 1, **dadurch gekennzeichnet, dass** die Brennkammer (11) mindestens eine Öffnung (20) nach aussen umfasst, durch welche Umgebungsluft als Oxidationsgas ansaugbar ist.

3. Russgenerator nach einem der Ansprüche 1 bis 2, **dadurch gekennzeichnet, dass** er Aufbereitungsmittel (23, 24) umfasst zum Filtrieren und/oder Trocknen des Oxidationsgases.

4. Russgenerator nach einem der Ansprüche 1 bis 3, **dadurch gekennzeichnet, dass** er Reguliermittel umfasst zum Einstellen der Strömungsgeschwindigkeit des Löschgases und dass vorzugsweise die Löschgasleitung (36) an einen Löschgasbehälter anschliessbar ist.

5. Russgenerator nach einem der Ansprüche 1 bis 4, **dadurch gekennzeichnet, dass** die Brennkammer (11) quer in der Löschgasleitung (36) einmündet, sodass die Flamme (30) quer mit Löschgas anströmbar ist.

6. Russgenerator nach einem der Ansprüche 1 bis 5, **dadurch gekennzeichnet, dass** er einen Brennstoffanschluss (19) aufweist zum Verbinden mit einem austauschbaren Brennstoffbehälter und dass er vorzugsweise Reguliermittel (18) umfasst zum Einstellen der Zuflussrate des Brennstoffs.

7. Russgenerator nach einem der Ansprüche 1 bis 6, **dadurch gekennzeichnet, dass** er Verdünnungsmittel (50, 52) aufweist zum Verdünnen der Konzentration der Russpartikel.

8. Russgenerator nach einem der Ansprüche 1 bis 7, **dadurch gekennzeichnet, dass** er einen Oxidationsgasanschluss (29) aufweist zum Verbinden mit einem Behälter, in welchem Oxidationsgas gespeichert ist, und dass er vorzugsweise Reguliermittel (28) umfasst zum Einstellen der Zuflussrate des Oxidationsgases.

9. Russgenerator nach einem der Ansprüche 1 bis 8, **dadurch gekennzeichnet, dass** die Löschgasleitung (36) ein erstes Leitungsteil (66) aufweist, dessen Ende (68) verschiebbar in einem zweiten Leitungsteil (76, 86) eingefügt ist.

10. Russgenerator nach einem der Ansprüche 1 bis 9, **dadurch gekennzeichnet, dass** er Löschgasfördermittel, insbesondere Pumpe, umfasst zum Fördern von Löschgas durch die Löschgasleitung (36).

11. Anwendung eines Russgenerators gemäss einem der Ansprüche 1 bis 10 zum Eichen von Messgeräten, zum Testen von Sensoren und/oder zum Prüfen von Filtern.

## Claims

1. Soot generator comprising at least one combustion chamber (11) for the combustion of a fuel with an oxidizing gas in at least one flame (30) that generates soot particles, and
a quenching gas line (36) that is connected to the combustion chamber, **characterized in that**
the quenching gas line comprises a constriction (46, 67), thereby allowing to create a pressure variation, more particularly a negative pressure.

2. Soot generator according to claim 1, **characterized in that** the combustion chamber (11) comprises at least one aperture (20) for aspirating ambient air as oxidizing gas.

3. Soot generator according to one of claims 1 to 2, **characterized in that** it includes conditioning means (23, 24) for filtering and/or drying the oxidizing gas.

4. Soot generator according to one of claims 1 to 3, **characterized in that** it comprises regulating means for adjusting the flow velocity of the quenching gas and that the quenching gas line (36) is preferably connectable to a quenching gas container.

5. Soot generator according to one of claims 1 to 4, **characterized in that** the combustion chamber (11) enters the quenching gas line (36) transversally, thereby allowing a quenching gas flow to be directed toward the flame (30) transversally.

6. Soot generator according to one of claims 1 to 5, **characterized in that** it comprises a fuel connection (19) for connection to an exchangeable fuel container, and **in that** it preferably comprises regulating means (18) for adjusting the flow rate of the fuel.

7. Soot generator according to one of claims 1 to 6, **characterized in that** it comprises diluting means (50, 52) for diluting the soot particle concentration.

8. Soot generator according to one of claims 1 to 7, **characterized in that** it comprises an oxidizing gas connection (29) for connection to a container having oxidizing gas stored therein, and **in that** it preferably comprises regulating means (28) for adjusting the flow rate of the oxidizing gas.

9. Soot generator according to one of claims 1 to 8, **characterized in that** the quenching gas line (36) comprises a first conduit portion (66) whose end (68) is displaceably inserted in a second conduit portion (76, 86).

10. Soot generator according to one of claims 1 to 9, **characterized in that** it comprises quenching gas feeding means, in particular a pump, for feeding a quenching gas through the quenching gas line (36).

11. Application of a soot generator according to one of claims 1 to 10 for calibrating measuring apparatus, for testing sensors and/or for inspecting filters.

## Revendications

1. Générateur de suie comprenant au minimum une chambre de combustion (11) dans laquelle le combustible peut être brûlé avec le gaz oxydant dans au minimum une flamme (30) dégageant des particules de suie, et un conduit de gaz d'extinction (36) relié à la chambre de combustion, **caractérisé en ce que** le conduit de gaz d'extinction présente un rétrécissement (46, 67) permettant de générer une variation de pression, et en particulier une dépression.

2. Générateur de suie selon revendication 1, **caractérisé en ce que** la chambre de combustion (11) comporte au minimum une ouverture (20) vers l'extérieur, par laquelle l'air ambiant peut être aspiré en tant que gaz oxydant.

3. Générateur de suie selon une des revendications 1 à 2, **caractérisé en ce qu'**il comporte des éléments de traitement (23, 24) pour le filtrage et/ou le séchage du gaz oxydant.

4. Générateur de suie selon une des revendications 1 à 3, **caractérisé en ce qu'**il comporte des éléments de réglage pour le réglage de la vitesse d'écoulement du gaz d'extinction, et que, de préférence, le conduit de gaz d'extinction (36) puisse être raccordé à un réservoir de gaz d'extinction.

5. Générateur de suie selon une des revendications 1 à 4, **caractérisé en ce que** la chambre de combustion (11) débouche transversalement dans le conduit de gaz d'extinction (36), de manière à ce que la flamme (30) afflue latéralement avec le gaz d'extinction.

6. Générateur de suie selon une des revendications 1 à 5, **caractérisé en ce qu'**il présente un raccordement pour le combustible (19) destiné au raccordement à un réservoir de combustible interchangeable et qui, de préférence, comporte des éléments de réglage (18) pour le réglage du niveau de débit du combustible.

7. Générateur de suie selon une des revendications 1 à 6, **caractérisé en ce qu'**il comporte des diluants (50, 52) pour la dilution de la concentration des particules de suie.

8. Générateur de suie selon une des revendications 1 à 7, **caractérisé en ce qu'**il comporte un raccordement pour le gaz oxydant (29) destiné au raccordement à un réservoir destiné au stockage du gaz oxydant, et qui, de préférence, comporte des éléments de réglage (28) pour le réglage du niveau de débit du gaz oxydant.

9. Générateur de suie selon une des revendications 1 à 8, **caractérisé en ce que** le conduit de gaz d'extinction (36) comporte un premier élément de conduit (66) dont l'extrémité (68) est insérée de manière coulissante dans un deuxième élément de conduit (76, 86).

10. Générateur de suie selon une des revendications 1 à 9, **caractérisé en ce qu'**il comporte un dispositif d'acheminement du gaz d'extinction, en particulier une pompe, pour l'acheminement du gaz d'extinction par le conduit de gaz d'extinction (36).

11. Utilisation d'un générateur de suie correspondant à une des revendications 1 à 10 pour l'étalonnage d'appareils de mesure, pour le test de capteurs et/ou pour le contrôle de filtres.
